(19) Europäisches Patentamt / European Patent Office / Office européen des brevets

(11) **EP 4 552 843 B1**

(12) **EUROPEAN PATENT SPECIFICATION**

(45) Date of publication and mention
of the grant of the patent:
**20.05.2026   Bulletin 2026/21**

(21) Application number: **23208503.5**

(22) Date of filing: **08.11.2023**

(51) International Patent Classification (IPC):
***B32B 27/08*** *(2006.01)*     ***B32B 27/32*** *(2006.01)*
***C08F 210/16*** *(2006.01)*

(52) Cooperative Patent Classification (CPC):
(C-Sets available)
**B32B 27/32; B32B 27/08; B32B 27/327;**
**C08F 110/02; C08F 210/16; C08L 23/0815;**
**C08L 23/142;** B32B 2250/03; B32B 2250/05;
B32B 2250/242; B32B 2270/00; B32B 2307/414;
B32B 2307/516; B32B 2307/558; B32B 2307/72;
(Cont.)

(54) **MACHINE DIRECTION ORIENTED (MDO) MULTILAYER FILM**

MASCHINENRICHTUNGSORIENTIERTE (MDO)-MEHRSCHICHTFOLIE

FILM MULTICOUCHE ORIENTÉ DANS LE SENS MACHINE (MDO)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(43) Date of publication of application:
**14.05.2025   Bulletin 2025/20**

(73) Proprietor: **Borealis GmbH**
**1020 Vienna (AT)**

(72) Inventors:
• **WANG, Jingbo**
**4021 Linz (AT)**

• **SEMAAN, Chantal**
**08008 Barcelona (ES)**

(74) Representative: **Maiwald GmbH**
**Elisenhof**
**Elisenstraße 3**
**80335 München (DE)**

(56) References cited:
**US-A1- 2004 126 518     US-B1- 6 322 883**
**US-B2- 11 535 012**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
B32B 2307/736; B32B 2307/7376; B32B 2439/70;
C08F 4/65908

C-Sets
**C08F 10/02, C08F 4/652;**
**C08F 110/02, C08F 4/6492;**
**C08F 210/06, C08F 2/001;**
**C08F 210/06, C08F 4/6465;**
**C08F 210/06, C08F 4/6492;**
**C08F 210/06, C08F 4/651;**
**C08F 210/06, C08F 4/6546;**
**C08F 210/06, C08F 4/659;**
**C08F 210/16, C08F 2/001;**
**C08L 23/0815, C08L 23/06;**
**C08L 23/0815, C08L 23/06, C08L 23/0815,**
**C08L 23/0815, C08L 23/0815;**
**C08L 23/0815, C08L 23/0815;**

**C08L 23/0815, C08L 23/0815, C08L 23/0815;**
**C08L 23/142, C08L 23/14;**
**C08L 23/142, C08L 23/14, C08L 23/0815,**
**C08L 23/0815;**
C08F 110/02, C08F 2500/12;
C08F 110/02, C08F 2500/12, C08F 2500/07;
C08F 210/06, C08F 210/16, C08F 2500/12,
C08F 2500/27, C08F 2500/34, C08F 2500/35,
C08F 2500/26;
C08F 210/06, C08F 210/16, C08F 2500/12,
C08F 2500/35, C08F 2500/27, C08F 2500/34,
C08F 2500/33, C08F 2500/26;
C08F 210/16, C08F 210/08, C08F 2500/07,
C08F 2500/12, C08F 2500/26;
C08F 210/16, C08F 210/14;
C08F 210/16, C08F 210/14, C08F 2500/27,
C08F 2500/36, C08F 2500/26

**Description**

**Field of the Invention**

The present invention pertains to a machine direction oriented (MDO) multilayer film comprising a first skin layer (A), a core layer (B) and a second skin layer (C). The present invention further pertains to the use of such machine direction oriented (MDO) multilayer films as heat-shrinkable film and/or form-fill-seal bags.

**Background of the Invention**

Packaging films based on polymers are currently designed depending on their intended end applications. Overall, it is commonly required to have packaging materials with improved mechanical and optical properties. In the recent years, the main focus has been shifted to increase sustainability of these packaging materials, ensuring the mentioned properties at the same time. Hence balancing these properties and ensuring a sustainable packaging material are not always straightforward.

Packaging materials are often made of multilayer polymer films, films made of more than one layers made of a different material with a different purpose. These films can be rather easily and flexibly designed as each layer would be ensuring a different property; however they do not always provide a fully sustainable solution. Current studies on sustainability of multilayer polymer films confirm that when there are various materials on the multilayer structure, recycling process, and in particular mechanical recycling process, becomes challenging. Hence, as per current guidelines for Design for Recycling (DfR), a film should be comprising at least 80 wt.-% of polyolefins (polyethylene or polypropylene) in order to be considered as at least limited compatible with mechanical recycling process. Furthermore, a film comprising at least 90 wt.-% of polyolefins (polyethylene or polypropylene) is considered as fully compatible with mechanical recycling.

US 2017/0342249 A1 relates to multilayer films suitable for stretch hood applications, comprising two outer layers comprising polyethylene and a core layer comprising a propylene-based elastomer in an amount of at least 50 wt.-%, based on total weight of the multilayer film. The film disclosed herein does not seem to be suitable for mechanical recycling process due to the design of the core layer.

US11535012 B2 relates to a MDO multilayered film comprising a first skin layer comprising HDPE (density 948 kg/m3; MFR5 1.8 g/10min), a core layer comprising a copolymer of ethylene and an alpha-olefin (density 931 kg/m3; MFR5 0.85 g/10min) and a second skin layer comprising an ethylene--based plastomer such as a copolymer of ethylene and propylene (R-PP) or a C4-C10 alpha olefin.

WO 2020/167441 A1 discloses an oriented multilayer film comprising a first layer, a second layer disposed on the first layer and a third layer disposed on the second layer. Although being focused on the sustainability aspect, the film disclosed has a full polyethylene structure.

The present invention focuses on solving the existing problems in design of multilayer films for packaging materials and on obtaining a balance of improved mechanical and optical properties, as well as recyclability. Therefore, the machine direction oriented (MDO) multilayer films with the specific layer design as described herein exhibit improved tensile modulus, tensile strength, elongation, shrinkage and haze. In particular, the shrinkage behavior of the mentioned film is observed to be very advantageous, reflected by high shrinkage at lower temperatures and low shrinkage at higher temperatures; hence the film according to the present invention is suitable to be used in heat-seal applications. Furthermore, another advantage of the machine direction oriented (MDO) multilayer films of the present invention is their compatibility for recycling in a mechanical recycling process, since they mainly comprise polyolefins.

**Summary of the Invention**

The present invention relates to a machine direction oriented (MDO) multilayer film comprising:

i) a first skin layer (A) comprising a multimodal high density polyethylene composition (HDPE) having a density, as determined in accordance with ISO 1183, of from 940 to 975 kg/m$^3$ and a melt flow rate MFR$_2$, as determined in accordance with ISO1133 at 2.16 kg and 190 °C, of from 0.1 to 10 g/10 min;

ii) a core layer (B), sandwiched between the first skin layer (A) and a second skin layer (C), comprising a copolymer of ethylene and at least a first C$_4$-C$_{12}$ alpha-olefin comonomer (CP) having a density, as determined in accordance with ISO 1183, of from 925 to 960 kg/m$^3$ and a melt flow rate MFR$_5$, as determined in accordance with ISO1133 at 5.0 kg and 190 °C, of from 0.1 to 10 g/10 min; and

iii) a second skin layer (C) comprising a propylene-ethylene random copolymer (R-PP) having a comonomer content,

as determined by $^{13}$C-NMR spectroscopy, of from 0.1 to 5.0 wt.-% and a melt flow rate $MFR_2$, as determined in accordance with ISO1133 at 2.16 kg and 230 °C, of from 0.1 to 10 g/10 min.

The present invention further relates to the use of the machine direction oriented (MDO) multilayer film as heat-shrinkable film and/or form-fill-seal bags.

**Detailed Description**

All the terms used herein are to be understood in their general meaning known to the skilled person in the art. In order to be more precise, the following terms will have the meaning as described herein below.

The term "multilayer film" as used herein refers to a film with a layered structure, i.e., comprising more than one layer.

The term "multimodal" as used herein refers to a polymer having two or more fractions different from each other in at least one property, such as weight average molecular weight or comonomer content. The molecular weight distribution curve of such multimodal polymers (graph of polymer weight fraction vs. molecular weight) exhibit two or more maxima depending on the modality, or such curve is distinctly broadened in comparison with the curves of individual fractions. When the polymer contains two different fractions, it is called "bimodal", similarly when it contains three different fractions, it is called "trimodal".

Machine direction oriented (MDO) multilayer film

The machine direction oriented (MDO) multilayer film according to the present invention comprises a first skin layer (A), a core layer (B) and a second skin layer (C), details of which are as following:

i) the first skin layer (A) comprises a multimodal high density polyethylene composition (HDPE) having a density, as determined in accordance with ISO 1183, of from 940 to 975 kg/m$^3$ and a melt flow rate $MFR_2$, as determined in accordance with ISO1133 at 2.16 kg and 190 °C, of from 0.1 to 10 g/10 min;

ii) the core layer (B), sandwiched between the first skin layer (A) and a second skin layer (C), comprises a copolymer of ethylene and at least a first $C_4$-$C_{12}$ alpha-olefin comonomer (CP) having a density, as determined in accordance with ISO 1183, of from 925 to 960 kg/m$^3$ and a melt flow rate $MFR_5$, as determined in accordance with ISO1133 at 5.0 kg and 190 °C, of from 0.1 to 10 g/10 min; and

iii) the second skin layer (C) comprises a propylene-ethylene random copolymer (R-PP) having a comonomer content, as determined by $^{13}$C-NMR spectroscopy, of from 0.1 to 5.0 wt.-% and a melt flow rate $MFR_2$, as determined in accordance with ISO1133 at 2.16 kg and 230 °C, of from 0.1 to 10 g/10 min.

The core layer (B) is sandwiched between the first (A) and the second (C) skin layers; that is the core layer (B) is covered by the first (A) and the second (C) skin layers on both sides.

It is preferred when the machine direction oriented (MDO) multilayer film according to the present invention further comprises a first sub-skin layer (A') which is preferably placed between the first skin layer (A) and the core layer (B), and a second sub-skin layer (C') which is preferably placed between the second skin layer (C) and the core layer (B). Therefore, in a preferred embodiment, the machine direction oriented (MDO) multilayer film of the present invention has the following structure in the given order: A/A'/B/C'/C.

The machine direction oriented (MDO) multilayer film according to the present invention preferably has a thickness of from 5 to 250 $\mu$m, more preferably from 10 to 200 $\mu$m, and most preferably from 15 to 100 $\mu$m.

The machine direction oriented (MDO) multilayer film according to the present invention preferably has improved optical properties in term of low haze, as determined in accordance with ASTM D1003 on 25 $\mu$m MDO multilayer film, of from 0 to 15%, more preferably from 2 to 12%, and most preferably from 5 to 10%.

Mechanical properties of the machine direction oriented (MDO) multilayer film measured as tensile modulus, tensile strength, elongation at break and shrinkage are also improved. It is preferred when the machine direction oriented (MDO) multilayer film has a tensile modulus in machine direction (TM/MD), as determined in accordance with ISO 527-3, of from 1000 to 2500 MPa, more preferably from 1300 to 2000 MPa, and most preferably from 1400 to 1800 MPa. It is also preferred when the machine direction oriented (MDO) multilayer film has a tensile modulus in transverse direction (TM/TD), as determined in accordance with ISO 527-3, of from 1100 to 2500 MPa, more preferably from 1200 to 2300 MPa, and most preferably from 1400 to 2000 MPa. Therefore it is highly preferred when the ratio of tensile modulus in machine direction (TM/MD) to tensile modulus in transverse direction (TM/TD), both as determined in accordance with ISO 527-3, is low, such as ranging from 0.1 to 3.0, more preferably from 0.5 to 2.0, and most preferably of from 0.7 to 1.5, which is a remarkable benefit since the anisotropic effect in MDO films tends to be strong.

It is further preferred when the machine direction oriented (MDO) multilayer film has a tensile strength in machine direction (TS/MD), as determined in accordance with ISO 527-3, of from 100 to 300 MPa, more preferably from 120 to 280 MPa, and most preferably from 170 to 250 MPa. It is also preferred when the machine direction oriented (MDO) multilayer film has a tensile strength in transverse direction (TS/TD), as determined in accordance with ISO 527-3, of from 10 to 100 MPa, more preferably from 20 to 80 MPa, and most preferably from 25 to 60 MPa.

Preferably, the machine direction oriented (MDO) multilayer film has an elongation at break in machine direction, as determined in accordance with ISO 527-3, of from 10 to 80%, more preferably from 20 to 70%, and most preferably from 25 to 60%. It is also preferred when the machine direction oriented (MDO) multilayer film has an elongation at break in transverse direction, as determined in accordance with ISO 527-3, of from 100 to 1200%, more preferably from 300 to 1000%, and most preferably from 500 to 900%.

One of the main advantage of the machine direction oriented (MDO) multilayer film according to the present invention is the enhanced shrinkage behavior. An ideal shrinkage behavior can be identified as a high shrinkage at lower temperatures, as the film will be shrunk over the content to be packed without high energy consumption.

Hence, it is preferred when the machine direction oriented (MDO) multilayer film has:

- a shrinkage in machine direction, as determined by the method described herein at 90 °C, of from -3 to -20%, more preferably from -5 to -15%, and/or

- a shrinkage in machine direction, as determined by the method described herein at 100 °C, of from -10 to -30%, more preferably from -15 to -25%.

It is also preferred when the machine direction oriented (MDO) multilayer film has a shrinkage in machine direction, as determined by the method described herein at 110 °C, of from -15 to -50%, more preferably from -20 to -40%. It is further preferred when the machine direction oriented (MDO) multilayer film has a shrinkage in machine direction, as determined by the method described herein at 120 °C, of from -35 to -70%, more preferably from -40 to -60%.

The machine direction oriented (MDO) multilayer film of the present invention is designed for recycling. That is, the film already has improved properties such as haze, shrinkage, tensile modulus, tensile strength and elongation at break, making it suitable to be used without the need of laminating it with different film structures. Therefore, the machine direction oriented (MDO) multilayer film according to the present invention comprises mainly polyolefins, in particular polypropylene and polyethylene. In particular, it is preferred that the machine direction oriented (MDO) multilayer film comprises at least 80 wt.-% of polyethylene, more preferably at least 85 wt.-% of polyethylene, and most preferably at least 90 wt.-% polyethylene, based on the total weight of the film.

Typically the manufacture of the machine direction oriented (MDO) film is a sequential process, the precursor film (or sheet) is formed in the first step with very high film thickness, *via* casting or blown process, preferably blown process. After the finishing of the precursor film (or sheet), it is stretch by MDO process to reach the final thickness. The original thickness of the precursor film is defined by stretch ratio and target final film thickness. For example, if the final MDO film has a 25 $\mu$m thickness, and it is manufactured with stretch ratio of 6.0, then the original sheet is 150 $\mu$m.

The multilayer film according to the present invention, prior to machine direction orientation (MDO), may be produced by co-extruding the layers. In such a process, the following steps are preferably followed:

a) feeding the components making up the polymer blend for each of the layers to a blown-film line,
b) co-extruding the multilayer film on the blown-film line.

Co-extrusion as mentioned in step b) above is well-known in the art and carried out by extruding at least two polymers melt streams in a simultaneous manner through a multichannel tubular, annular or circular die to form a tube which is blown-up, inflated and/or cooled with air (or a combination of gases) to form the film.

Blown coextrusion of step b) as described above is preferably conducted at a temperature from 160 °C to 240 °C, while the subsequent cooling is preferably conducted by a blowing gas (for instance, air) at a temperature from 10 to 50 °C to provide a frost line height of 1 to 8 times the diameter of the die.

The blow up ratio (BUR) should generally be in the range 1.2 to 6, preferably 1.5 to 4.

Machine direction orientation (MDO) is a well-known process and widely applied in industrial scale. This process is done by stretching the film between rolls rotating at different speeds, with the second set of rolls running faster than the first ones. The first set of rolls stabilizes the film surface temperature and allows time for inner sheet temperature balance. After stretching the film is cooled. The typical stretching ratio in MD direction is 2.0 - 16.0 times, from 3.0-12.0, preferably 4.0 - 10.0, and most preferred range is 4.5 - 7.0.

The present invention further relates to the use of the machine direction oriented (MDO) multilayer film described herein as heat-shrinkable film and/or form-fill-seal bags.

First skin layer (A)

The first skin layer (A) comprises a multimodal high density polyethylene composition (HDPE), preferably in an amount of from 70 to 100 wt.-%, more preferably from 90 to 100 wt.-%, based on the total weight of the first skin layer (A). It is the most preferred when the first skin layer (A) consists of the multimodal high density polyethylene composition (HDPE).

*Multimodal high density polyethylene composition (HDPE)*

The multimodal high density polyethylene composition (HDPE) has a density, as determined in accordance with ISO 1183, of from 940 to 975 $kg/m^3$, preferably from 945 to 970 $kg/m^3$, and more preferably from 950 to 960 $kg/m^3$.

The multimodal high density polyethylene composition (HDPE) has a melt flow rate $MFR_2$, as determined in accordance with ISO1133 at 2.16 kg and 190 °C, of from 0.1 to 10 g/10 min, preferably from 0.2 to 5 g/10 min, and more preferably from 0.3 to 2 g/10 min.

The multimodal high density polyethylene composition (HDPE) preferably has a melt flow rate $MFR_{21}$, as determined in accordance with ISO1133 at 21.6 kg and 190 °C, of from 5 to 150 g/10 min, more preferably from 10 to 100 g/10 min, and most preferably from 20 to 70 g/10 min.

The multimodal high density polyethylene composition (HDPE) preferably has a flow rate ratio (FRR), as determined in accordance with ISO1133, of from 5 to 150, more preferably from 20 to 100, and most preferably from 40 to 80.

First sub-skin layer (A')

It is preferred when the first sub-skin layer (A') comprises a multimodal high density polyethylene composition (HDPE) with a density as determined in accordance with ISO 1183, of from 940 to 975 $kg/m^3$, and a copolymer of ethylene and at least a first C4-C12 alpha-olefin comonomer (CP) having a density as determined in accordance with ISO 1183, of from 925 to 960 $kg/m^3$.

The amount of the multimodal high density polyethylene composition (HDPE) preferably ranges from 40 to 90 wt.-%, more preferably from 50 to 80 wt.-%, and most preferably from 55 to 70 wt.-%, and the amount of the copolymer of ethylene and a first $C_4$-$C_{12}$ alpha-olefin comonomer (CP) preferably ranges from 10 to 60 wt.-%, more preferably from 20 to 50 wt.-%, and most preferably from 30 to 45 wt.-%, based on the total weight of the first sub-skin layer (A').

*Multimodal high density polyethylene composition (HDPE)*

The multimodal high density polyethylene composition (HDPE) has a density, as determined in accordance with ISO 1183, of from 940 to 975 $kg/m^3$, preferably from 945 to 970 $kg/m^3$, and more preferably from 950 to 960 $kg/m^3$.

The multimodal high density polyethylene composition (HDPE) has a melt flow rate $MFR_2$, as determined in accordance with ISO1133 at 2.16 kg and 190 °C, of from 0.1 to 10 g/10 min, preferably from 0.2 to 5 g/10 min, and more preferably from 0.3 to 2 g/10 min.

The multimodal high density polyethylene composition (HDPE) preferably has a melt flow rate $MFR_{21}$, as determined in accordance with ISO1133 at 21.6 kg and 190 °C, of from 5 to 150 g/10 min, more preferably from 10 to 100 g/10 min, and most preferably from 20 to 70 g/10 min.

The multimodal high density polyethylene composition (HDPE) preferably has a flow rate ratio (FRR), as determined in accordance with ISO1133, of from 5 to 150, more preferably from 20 to 100, and most preferably from 40 to 80.

It is preferred when the multimodal high density polyethylene compositions (HDPE) used in the first skin layer (A) and the first sub-skin layer (A') have the same composition, i.e. are the same polymer with the same recipe.

*Copolymer of ethylene (CP)*

The copolymer of ethylene and at least a first C4-C12 alpha-olefin comonomer (CP) has a density, as determined in accordance with ISO 1183, of from 925 to 960 $kg/m^3$, preferably from 930 to 955 $kg/m^3$, more preferably from 935 to 945 $kg/m^3$, and has a melt flow rate $MFR_5$, as determined in accordance with ISO1133 at 5.0 kg and 190 °C, of from 0.1 to 10 g/10 min, preferably from 0.5 to 5 g/10 min, and most preferably from 1.0 to 3 g/10 min.

It is preferred when the copolymer of ethylene and at least a first C4-C12 alpha-olefin comonomer (CP) further comprises a second $C_4$-$C_{12}$ alpha-olefin comonomer. It is the most preferred when the first $C_4$-$C_{12}$ alpha-olefin comonomer is 1-butene and the second $C_4$-$C_{12}$ alpha-olefin comonomer is 1-hexene, that is the copolymer of ethylene (CP) is a terpolymer of ethylene/1-butene/1-hexene.

When the copolymer of ethylene (CP) is a terpolymer of ethylene/1-butene/1-hexene, it is further preferred when:

- a 1-butene content, as determined by $^{13}$C-NMR spectroscopy, ranges from 0.1 to 10 wt.-%, more preferably from 0.2 to 5 wt.-%, and most preferably from 0.5 to 3 wt.-%; and/or

- a 1-hexene content, as determined by $^{13}$C-NMR spectroscopy, ranges from 0.1 to 20 wt.-%, more preferably from 1 to 10 wt.-%, and most preferably from 2 to 7 wt.-%.

The copolymer of ethylene (CP) preferably has a melt flow rate MFR$_2$, as determined in accordance with ISO1133 at 2.16 kg and 190 °C, of from 0.1 to 10 g/10 min, preferably from 0.15 to 5 g/10 min, and most preferably from 0.2 to 1 g/10 min, and a melt flow rate MFR$_{21}$, as determined in accordance with ISO1133 at 21.6 kg and 190 °C, of from 5 to 100 g/10 min, preferably from 10 to 80 g/10 min, and most preferably from 20 to 50 g/10 min.

It is preferred when the copolymer of ethylene (CP) according to the present invention is trimodal, comprising:

a) a first ethylene homopolymer in an amount from 10 to 30 wt.-%, more preferably from 15 to 25 wt.-%;

b) a second ethylene homopolymer having an MFR$_2$ which is at least 50 g/10 min higher than the MFR$_2$ of component a), in an amount from 15 to 35 wt.-%, more preferably from 20 to 30 wt.-%; and

c) a third ethylene copolymer with at least at least a first C4-C12 alpha-olefin comonomer, in an amount from 35 to 75 wt.-%, more preferably from 45 to 65 wt.-%;

wherein the amounts are based on the total weight of the copolymer of ethylene (CP), wherein the sum of weight percentages of a), b) and c) is 100 wt.-%.

Core layer (B)

The core layer (B) is sandwiched between the first skin layer (A) and the second skin layer (C) and comprises a copolymer of ethylene and at least a first C4-C12 alpha-olefin comonomer (CP) preferably in an amount of from 70 to 100 wt.-%, more preferably from 90 to 100 wt.-%, based on the total weight of the core layer (B). It is the most preferred when the core (B) consists of the copolymer of ethylene (CP).

*Copolymer of ethylene (CP)*

The copolymer of ethylene and at least a first C4-C12 alpha-olefin comonomer (CP) has a density, as determined in accordance with ISO 1183, of from 925 to 960 kg/m$^3$, preferably from 930 to 955 kg/m$^3$, more preferably from 935 to 945 kg/m$^3$, and has a melt flow rate MFR$_5$, as determined in accordance with ISO1133 at 5.0 kg and 190 °C, of from 0.1 to 10 g/10 min, preferably from 0.5 to 5 g/10 min, and more preferably from 1.0 to 3 g/10 min.

It is preferred when the copolymer of ethylene and at least a first C4-C12 alpha-olefin comonomer (CP) further comprises a second $C_4$-$C_{12}$ alpha-olefin comonomer. It is the most preferred when the first $C_4$-$C_{12}$ alpha-olefin comonomer is 1-butene and the second $C_4$-$C_{12}$ alpha-olefin comonomer is 1-hexene, that is the copolymer of ethylene (CP) is a terpolymer of ethylene/1-butene/1-hexene.

When the copolymer of ethylene (CP) is a terpolymer of ethylene/1-butene/1-hexene, it is further preferred when:

- a 1-butene content, as determined by $^{13}$C-NMR spectroscopy, ranges from 0.1 to 10 wt.-%, more preferably from 0.2 to 5 wt.-%, and most preferably from 0.5 to 3 wt.-%; and/or

- a 1-hexene content, as determined by $^{13}$C-NMR spectroscopy, ranges from 0.1 to 20 wt.-%, more preferably from 1 to 10 wt.-%, and most preferably from 2 to 7 wt.-%.

The copolymer of ethylene (CP) preferably has a melt flow rate MFR$_2$, as determined in accordance with ISO1133 at 2.16 kg and 190 °C, of from 0.1 to 10 g/10 min, preferably from 0.15 to 5 g/10 min, and most preferably from 0.2 to 1 g/10 min, and a melt flow rate MFR$_{21}$, as determined in accordance with ISO1133 at 21.6 kg and 190 °C, of from 5 to 100 g/10 min, preferably from 10 to 80 g/10 min, and most preferably from 20 to 50 g/10 min.

It is preferred when the copolymer of ethylene (CP) according to the present invention is trimodal, comprising:

a) a first ethylene homopolymer in an amount from 10 to 30 wt.-%, more preferably from 15 to 25 wt.-%;

b) a second ethylene homopolymer having an MFR$_2$ which is at least 50 g/10 min higher than the MFR$_2$ of component a), in an amount from 15 to 35 wt.-%, more preferably from 20 to 30 wt.-%; and

c) a third ethylene copolymer with at least a first C4-C12 alpha-olefin comonomer, in an amount from 35 to 75 wt.-%, more preferably from 45 to 65 wt.-%;

wherein the amounts are based on the total weight of the copolymer of ethylene (CP), and wherein the sum of weight percentages of a), b) and c) is 100 wt.-%.

It is preferred when the copolymer of ethylene (CP) used in the first sub-skin layer (A') and the core layer (B) have the same composition, i.e. are the same polymer with the same recipe.

Second skin layer (C)

The second skin layer (C) according to the present invention comprises a propylene-ethylene random copolymer (R-PP), preferably in an amount of from 70 to 100 wt.-%, and more preferably from 80 to 100 wt.-%, based on the total weight of the second skin layer (C).

It is further preferred when the second skin layer comprises a bimodal ethylene/1-butene/$C_{6-12}$-alpha-olefin terpolymer (TP), preferably in an amount of from 0 to 30 wt.-%, more preferably from 0 to 20 wt.-%, based on the total weight of the second skin layer (C).

*Propylene-ethylene random copolymer (R-PP)*

The propylene-ethylene random copolymer (R-PP) has a comonomer content, as determined by $^{13}$C-NMR spectroscopy, of from 0.1 to 5.0 wt.-%.

The propylene-ethylene random copolymer (R-PP) has a melt flow rate $MFR_2$, as determined in accordance with ISO1133 at 2.16 kg and 230 °C, of from 0.1 to 10 g/10 min, preferably from 0.5 to 7 g/10 min, and more preferably from 1 to 5 g/10 min.

The propylene-ethylene random copolymer (R-PP) preferably has:

- a comonomer content, as determined by $^{13}$C-NMR spectroscopy, of from 0.2 to 4.5 wt.-%, more preferably from 0.5 to 3.0 wt.-%; and/or

- a xylene cold soluble content (XCS), as determined in accordance with ISO 16152, of from 0.1 to 10 wt.-%, more preferably from 0.2 to 5.0 wt.-%, and most preferably from 0.3 to 3.5 wt.-%.

It is preferred when the propylene-ethylene random copolymer (R-PP) has a melting temperature Tm, as determined in accordance with ISO 11357 / part 3 / method C2, of from 130 to 170 °C, and more preferably from 135 to 165 °C.

It is also preferred when the propylene-ethylene random copolymer (R-PP) has an amount of 2,1-regiodefects, as determined by $^{13}$C-NMR spectroscopy, of from 0 to 5.0 mol-%, more preferably from 0.1 to 3.0 mol-%, and most preferably from 0.4 to 2.0 mol-%.

*Bimodal ethylene/1-butene/$C_{6-12}$-alpha-olefin terpolymer (TP)*

The bimodal ethylene/1-butene/$C_{6-12}$-alpha-olefin terpolymer (TP) preferably has a density, as determined in accordance with ISO 1183, of from 910 to 930 kg/m$^3$, and more preferably from 915 to 925 kg/m$^3$, and a melt flow rate $MFR_2$, as determined in accordance with ISO1133 at 2.16 kg and 190 °C, of from 0.1 to 10 g/10 min, more preferably from 0.2 to 5 g/10 min, and most preferably from 1 to 2 g/10 min.

The $C_{6-12}$-alpha-olefin of the terpolymer (TP) can be selected from a group consisting of 1-hexene, 1-octene, 4-methyl-1-pentene, and 1-decene. It is the most preferred when the bimodal ethylene/1-butene/$C_{6-12}$-alpha-olefin terpolymer (TP) is a terpolymer of ethylene/1-butene/1-octene.

Second sub-skin layer (C')

It is preferred when the second sub-skin layer (C') comprises a copolymer of ethylene and at least a first C4-C12 alpha-olefin comonomer (CP), preferably in an amount of from 70 to 100 wt.-%, and more preferably from 80 to 100 wt.-%, based on the total weight of the second sub-skin layer (C').

It is further preferred when the second sub-skin layer (C') comprises a bimodal ethylene/1-butene/$C_{6-12}$-alpha-olefin terpolymer (TP), preferably in an amount of from 0 to 30 wt.-%, more preferably from 0 to 20 wt.-%, based on the total weight of the sub-second skin layer (C').

*Copolymer of ethylene (CP)*

The copolymer of ethylene and at least a first C4-C12 alpha-olefin comonomer (CP) has a density, as determined in accordance with ISO 1183, of from 925 to 960 kg/m$^3$, preferably from 930 to 955 kg/m$^3$, more preferably from 935 to 945 kg/m$^3$, and has a melt flow rate MFR$_5$, as determined in accordance with ISO1133 at 5.0 kg and 190 °C, of from 0.1 to 10 g/10 min, preferably from 0.5 to 5 g/10 min, and most preferably from 1.0 to 3 g/10 min.

It is preferred when the copolymer of ethylene and a first C$_4$-C$_{12}$ alpha-olefin comonomer (CP) further comprises a second C$_4$-C$_{12}$ alpha-olefin comonomer. It is the most preferred when the first C$_4$-C$_{12}$ alpha-olefin comonomer is 1-butene and the second C$_4$-C$_{12}$ alpha-olefin comonomer is 1-hexene, that is the copolymer of ethylene (CP) is a terpolymer of ethylene/1-butene/1-hexene.

When the copolymer of ethylene (CP) is a terpolymer of ethylene/1-butene/1-hexene, it is further preferred when:

- a 1-butene content, as determined by $^{13}$C-NMR spectroscopy, ranges from 0.1 to 10 wt.-%, more preferably from 0.2 to 5 wt.-%, and most preferably from 0.5 to 3 wt.-%; and/or

- a 1-hexene content, as determined by $^{13}$C-NMR spectroscopy, ranges from 0.1 to 20 wt.-%, more preferably from 1 to 10 wt.-%, and most preferably from 2 to 7 wt.-%.

The copolymer of ethylene (CP) preferably has a melt flow rate MFR$_2$, as determined in accordance with ISO1133 at 2.16 kg and 190 °C, of from 0.1 to 10 g/10 min, preferably from 0.15 to 5 g/10 min, and most preferably from 0.2 to 1 g/10 min, and a melt flow rate MFR$_{21}$, as determined in accordance with ISO1133 at 21.6 kg and 190 °C, of from 5 to 100 g/10 min, preferably from 10 to 80 g/10 min, and most preferably from 20 to 50 g/10 min.

It is preferred when the copolymer of ethylene (CP) according to the present invention is trimodal, comprising:

a) a first ethylene homopolymer in an amount from 10 to 30 wt.-%, more preferably from 15 to 25 wt.-%;

b) a second ethylene homopolymer having an MFR$_2$ which is at least 50 g/10 min higher than the MFR$_2$ of component a), in an amount from 15 to 35 wt.-%, more preferably from 20 to 30 wt.-%; and

c) a third ethylene copolymer with at least at least a first C4-C12 alpha-olefin comonomer, in an amount from 35 to 75 wt.-%, more preferably from 45 to 65 wt.-%;

wherein the amounts are based on the total weight of the copolymer of ethylene (CP) and wherein the sum of weight percentages of a), b) and c) is 100 wt.-%.

It is preferred when the copolymer of ethylene (CP) used in the first sub-skin layer (A'), the core layer (B) and the second sub-skin layer (C') have the same composition, i.e. are the same polymer with the same recipe.

*Bimodal ethylene/1-butene/C$_{6-12}$-alpha-olefin terpolymer (TP)*

The bimodal ethylene/1-butene/C$_{6-12}$-alpha-olefin terpolymer (TP) preferably has a density, as determined in accordance with ISO 1183, of from 910 to 930 kg/m$^3$, and more preferably from 915 to 925 kg/m$^3$, and a melt flow rate MFR$_2$, as determined in accordance with ISO1133 at 2.16 kg and 190 °C, of from 0.1 to 10 g/10 min, more preferably from 0.2 to 5 g/10 min, and most preferably from 1 to 2 g/10 min.

The C$_{6-12}$-alpha-olefin of the terpolymer (TP) can be selected from a group consisting of 1-hexene, 1-octene, 4-methyl-1-pentene, and 1-decene. It is the most preferred when the bimodal ethylene/1-butene/C$_{6-12}$-alpha-olefin terpolymer (TP) is a terpolymer of ethylene/1-butene/1-octene.

It is preferred when the bimodal ethylene/1-butene/C$_{6-12}$-alpha-olefin terpolymer (TP) used in the second skin layer (C) and the second sub-skin layer (C') have the same composition, i.e. are the same polymer with the same recipe.

MEASUREMENT METHODS

Melt Flow Rate (MFR)

The melt flow rate (MFR) was determined according to ISO 1133 and is indicated in g/10 min. The higher the melt flow rate, the lower the viscosity of the polymer. The MFR was determined at 190 °C for polyethylene and at 230 °C for polypropylene, at a loading of 2.16 kg (MFR$_2$), 5.00 kg (MFR$_5$) or 21.6 kg (MFR$_{21}$). The flow rate ratio FRR for all polymers was calculated as a ratio of MFR$_{21}$ to MFR$_2$.

In the case of multi-step polymerization process, for instance when the polymer is produced in a loop-loop-gas phase reactor setup, the MFR$_2$ of the second loop fraction can be calculated according to the formula below:

$$MFR\ (B) = 10^{\left[\frac{\log(MFR(C))-w(A)xlog(MFR(A))}{w(B)}\right]}\ (I)$$

wherein

w(A) is the weight fraction in [wt.-%] of the first loop fraction,

w(B) is the weight fraction in [wt.-%] of second loop fraction,

MFR(C) is melt flow rate MFR$_2$ (190 °C for polyethylene and 230 °C for polypropylene) in [g/10 min] of the polymer produced in the second loop, which is the combination of first and the second loop fractions (it is measured),

MFR(A) is melt flow rate MFR$_2$ (190 °C for polyethylene and 230 °C for polypropylene) in [g/10 min] of the first loop fraction,

MFR(B) is melt flow rate MFR$_2$ (190 °C for polyethylene and 230 °C for polypropylene) in [g/10 min] of the second loop fraction.

Density

Density of the polymers was measured according to ISO 1183-1:2019 (method A) on compression molded specimens prepared according to EN ISO 1872-2 (Feb 2007) and is given in kg/m$^3$.

Quantification of microstructure by NMR spectroscopy

Quantitative nuclear-magnetic resonance (NMR) spectroscopy was used to quantify the comonomer content and regio-regularity of the propylene-ethylene random copolymers and comonomer content of ethylene terpolymers.

*Propylene-ethylene random copolymers*

Quantitative $^{13}$C{$^1$H} NMR spectra were recorded in the solution-state using a Bruker Advance III 400 NMR spectrometer operating at 400.15 and 100.62 MHz for $^1$H and $^{13}$C respectively. All spectra were recorded using a $^{13}$C optimised 10 mm extended temperature probe head at 125 °C using nitrogen gas for all pneumatics.

Approximately 200 mg of material was dissolved in *1,2*-tetrachloroethane-*d$_2$* (TCE-*d$_2$*). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution needed for tacticity distribution quantification (Busico, V., Cipullo, R., Prog. Polym. Sci. 26 (2001) 443; Busico, V.; Cipullo, R., Monaco, G., Vacatello, M., Segre, A.L., Macromolecules 30 (1997) 6251). Standard single-pulse excitation was employed utilising the NOE and bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 8192 (8k) transients were acquired per spectra.

Quantitative $^{13}$C{$^1$H} NMR spectra were processed, integrated and relevant quantitative properties determined from the integrals using proprietary computer programs. All chemical shifts are internally referenced to the methyl isotactic pentad (mmmm) at 21.85 ppm.

Characteristic signals corresponding to regio defects (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) or comonomer were observed.

The tacticity distribution was quantified through integration of the methyl region between 23.6-19.7 ppm correcting for any sites not related to the stereo sequences of interest (Busico, V., Cipullo, R., Prog. Polym. Sci. 26 (2001) 443; Busico, V., Cipullo, R., Monaco, G., Vacatello, M., Segre, A.L., Macromolecules 30 (1997) 6251).

Specifically the influence of regio-defects and comonomer on the quantification of the tacticity distribution was corrected for by subtraction of representative regio-defect and comonomer integrals from the specific integral regions of the stereo sequences.

The isotacticity was determined at the pentad level and reported as the percentage of isotactic pentad (mmmm) sequences with respect to all pentad sequences:

$$[\text{mmmm}] \% = 100 * (\text{mmmm} / \text{sum of all pentads})$$

The presence of 2,1 erythro regio-defects was indicated by the presence of the two methyl sites at 17.7 and 17.2 ppm and confirmed by other characteristic sites. Characteristic signals corresponding to other types of regio-defects were not observed (Resconi, L., Cavallo, L., Fait, A., Piemontesi, F., Chem. Rev. 2000, 100, 1253).

The amount of 2,1 erythro regio-defects was quantified using the average integral of the two characteristic methyl sites at 17.7 and 17.2 ppm:

$$P_{21e} = (I_{e6} + I_{e8}) / 2$$

The amount of 1,2 primary inserted propene was quantified based on the methyl region with correction undertaken for sites included in this region not related to primary insertion and for primary insertion sites excluded from this region:

$$P_{12} = I_{CH3} + P_{12e}$$

The total amount of propene was quantified as the sum of primary inserted propene and all other present regio-defects:

$$P_{total} = P_{12} + P_{21e}$$

The mole percent of 2,1 erythro regio-defects was quantified with respect to all propene:

$$[21e] \text{ mol-}\% = 100 * (P_{21e} / P_{total})$$

The comonomer fraction was quantified using the method of Wang et. al. (Wang, W-J., Zhu, S., Macromolecules 33 (2000), 1157) through integration of multiple signals across the whole spectral region in the $^{13}C\{^1H\}$ spectra. This method was chosen for its robust nature and ability to account for the presence of regio-defects when needed. Integral regions were slightly adjusted to increase applicability across the whole range of encountered comonomer contents.

For systems where only isolated ethylene in PPEPP sequences was observed the method of Wang et. al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5(S_{\beta\beta} + S_{\beta\gamma} + S_{\beta\delta} + 0.5(S_{\alpha\beta} + S_{\alpha\gamma}))$$

Through the use of this set of sites the corresponding integral equation becomes:

$$E = 0.5(I_H + I_G + 0.5(I_C + I_D))$$

using the same notation used in the article of Wang et. al. (Wang, W-J., Zhu, S., Macromolecules 33 (2000), 1157). Equations used for absolute propylene content were not modified.

The mole percent comonomer incorporation was calculated from the mole fraction:

$$E \text{ [mol-}\%] = 100 * f_E$$

The weight percent comonomer incorporation was calculated from the mole fraction:

$$E \text{ [wt.-}\%] = 100 * (f_E * 28.06) / ((f_E * 28.06) + ((1-f_E) * 42.08))$$

*Ethylene terpolymers*

Quantitative $^{13}C\{^1H\}$ NMR spectra recorded in the molten-state using a Bruker Advance III 500 NMR spectrometer operating at 500.13 and 125.76 MHz for $^1H$ and $^{13}C$ respectively. All spectra were recorded using a $^{13}C$ optimised 7

mm magic-angle spinning (MAS) probehead at 150 °C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification {klimke06}. Standard single-pulse excitation was employed utilising the NOE at short recycle delays {pollard04} and the RS-HEPT decoupling scheme {fillip05}. A total of 1024 (1k) transients were acquired per spectra.

Quantitative $^{13}C\{^1H\}$ NMR spectra were processed, integrated and relevant quantitative properties determined from the integrals. All chemical shifts are internally referenced to the bulk methylene signal ($\delta+$) at 30.00 ppm.

The amount of ethylene was quantified using the integral of the methylene ($\delta+$) sites at 30.00 ppm accounting for the number of reporting sites per monomer:

$$E = I_{\delta+} / 2$$

the presence of isolated comonomer units is corrected for based on the number of isolated comonomer units present:

$$E_{total} = E + (3*B + 2*H) / 2$$

where B and H are defined for their respective comonomers. Correction for consecutive and non-consecutive commoner incorporation, when present, is undertaken in a similar way.

Characteristic signals corresponding to the incorporation of 1-butene were observed and the comonomer fraction calculated as the fraction of 1-butene in the polymer with respect to all monomer in the polymer:

$$fHtotal = ( Htotal / ( Etotal + Btotal + Htotal )$$

The amount isolated 1-butene incorporated in EEBEE sequences was quantified using the integral of the *B2 sites at 38.3 ppm accounting for the number of reporting sites per comonomer:

$$B = I_{*B2}$$

The mole fraction of 1-butene existing as isolated comonomer in the polymer can then be calculated:

$$fB = ( B / ( Etotal + Btotal + Htotal )$$

With no sites indicative of consecutive incorporation observed the total 1-butene comonomer content was calculated solely on this quantity:

$$Btotal = B$$

Characteristic signals corresponding to the incorporation of 1-hexene were observed and the comonomer fraction calculated as the fraction of 1-hexene in the polymer with respect to all monomer in the polymer:

$$fHtotal = ( Htotal / ( Etotal + Btotal + Htotal )$$

The amount isolated 1-hexene incorporated in EEHEE sequences was quantified using the integral of the *B4 sites at 39.9 ppm accounting for the number of reporting sites per comonomer:

$$H = I_{*B4}$$

The mole fraction of 1-hexene existing as isolated comonomer in the polymer can then be calculated:

$$fH = ( H / ( Etotal + Btotal + Htotal )$$

With no sites indicative of consecutive incorporation observed the total 1-hexen comonomer content was calculated solely on this quantity:

$$Htotal = H$$

The mole percent comonomer incorporation is calculated from the mole fraction:

$$B [mol\%] = 100 * fB$$

$$H [mol\%] = 100 * fH$$

klimke06: Klimke, K., Parkinson, M., Piel, C., Kaminsky, W., Spiess, H.W., Wilhelm, M., Macromol. Chem. Phys. 2006;207:382.

pollard04: Pollard, M., Klimke, K., Graf, R., Spiess, H.W., Wilhelm, M., Sperber, O., Piel, C., Kaminsky, W., Macromolecules 2004;37:813.

filip05: Filip, X., Tripon, C., Filip, C., J. Mag. Resn. 2005, 176, 239

Xylene Cold Soluble Content (XCS, wt.-%)

The amount of the polymer soluble in xylene was determined at 25 °C according to ISO 16152; 5th edition; 2005-07-01.

DSC Analysis

The melting temperature ($T_m$) and crystallization temperature ($T_c$) were measured with a TA Instrument Q200 differential scanning calorimetry (DSC) on 5 to 7 mg samples. DSC was run according to ISO 11357 / part 3 / method C2 in a heat / cool / heat cycle with a scan rate of 10 °C/min in the temperature range of -30 to +225 °C. Crystallization temperature ($T_c$) was determined from the cooling step, while melting temperature ($T_m$) was determined from the second heating step.

Haze

Haze was determined according to ASTM D1003-00 directly on 25 $\mu$m MDO multilayer films of the experimental section.

Mechanical Properties

Tensile modulus in machine and transverse direction were determined on 25 $\mu$m MDO multilayer films of the experimental section, according to ISO 527-3 at 23 °C on the multilayer films produced in the experimental section. Testing was performed at a cross-head speed of 1 mm/min.
Subsequently tensile strength and elongation at break in machine and transverse direction were determined on 25 $\mu$m multilayer films of the experimental section, according to ISO 527-3 on the same specimens using a cross head speed of 50 mm/min. Test speed was changed after a deformation of 0.25 %.

Shrinkage measurements

Shrinkage of the 25 $\mu$m MDO multilayer films of the experimental section was measured in heating in a circulating-air oven, which is based on modified ISO 11501:1995. The specimens with a dimension of 100 mm x 100 mm were placed on a talc bed in a circulating-air oven for a specified time at a specified temperature. The shrinkage of the specimens was measured in machine direction. Deviating from ISO 11501, the medium talc was used instead of kaolin. Furthermore, the dimensional change was determined on test specimens with the dimensions of 100 mm x 100 mm (method A).

*Standard conditions:*

Conditioning time: > 96 h

Test temperature: X °C

Heating time: 30 min

Medium: Air-Talc

Specimen dimensions: 100 mm x 100 mm. X °C was chosen setting temperature indicated in Table 7 of the experimental section.

**Examples**

Materials

Anteo™ FK1820 is a bimodal LLDPE terpolymer that is commercially available from Borouge with a density of 918 kg/m$^3$ and an MFR2 of 1.5 g/10 min.
CP is a trimodal ethylene terpolymer that was produced as detailed in Table 1.
HDPE is a bimodal high density polyethylene that was produced as detailed in Table 2.
R-PP1 and R-PP2 are propylene-ethylene random copolymers, whose polymerization details are presented in Table 3 and 4, respectively.

Polymerization of CP

Trimodal ethylene/1-butene/1-hexene terpolymer was produced in a setup of loop-loop-gas phase reactors, with pre-polymerization step prior to the first loop polymerization. The production conditions are detailed hereinbelow.
A loop reactor having a volume of 50 dm$^3$ was operated at a temperature of 70 °C and a pressure of 57 bar. Into the reactor were fed ethylene, propane diluent, 1-butene as a comonomer and hydrogen. Also, a solid polymerization catalyst component produced as described in Example 1 of EP 1378528 was introduced into the reactor together with triethylaluminium cocatalyst so that the molar ratio of Al/Ti was about 15. The estimated production split was about 2 wt.-%.
A stream of slurry was continuously withdrawn and directed to a loop reactor having a volume of 150 dm$^3$ and which was operated at a temperature of 95 °C and a pressure of 56 bar. Into the reactor were further fed additional ethylene, propane diluent and hydrogen so that the ethylene concentration in the fluid mixture was 4.7 mol-% and the molar ratio of hydrogen to ethylene was 306 mol/kmol. The estimated production split was 18 wt.-%. The ethylene homopolymer withdrawn from the reactor had MFR$_2$ of 195 g/10 min.
A stream of slurry from the reactor was withdrawn intermittently and directed into a loop reactor having a volume of 350 dm$^3$ and which was operated at 95 °C temperature and 54 bar pressure. Into the reactor was further added a fresh propane, ethylene, and hydrogen so that the ethylene content in the fluid mixture was 5.5 mol-% and the molar ratio of hydrogen to ethylene was 563 mol/kmol. The estimated production split was 26 wt.-%. The ethylene homopolymer withdrawn from the reactor had MFR$_2$ of 390 g/10 min.
The slurry was withdrawn from the loop reactor intermittently and directed to a flash vessel operated at a temperature of 50 °C and a pressure of 3 bar. From there the polymer was directed to a fluidized bed gas phase reactor operated at a pressure of 20 bar and a temperature of 82 °C. Additional ethylene, 1-butene and 1-hexene comonomer, nitrogen as inert gas and hydrogen were added so that the ethylene content in the reaction mixture was 13.3 mol-% and the molar ratio of 1-butene to ethylene was 92.1 mol/kmol and the molar ratio of 1-hexene to ethylene was 121.8 mol/kmol. The estimated production split was 54 wt.-%.
The polymer powder was mixed under nitrogen atmosphere with 1200 ppm of Irganox B561 (commercially available by BASF) and 400 ppm Ca-stearate (CEASIT FI, supplied by Baerlocher). Then it was compounded and extruded under nitrogen atmosphere to pellets by using a JSW CIMP90 twin screw extruder. Final properties of CP are reported in Table 1.

Table 1. Properties of CP

| | |
|---|---|
| Measured Loop1 MFR$_2$ [g/10 min] | 195 |
| Loop1 split including prepoly [wt.-%] | 20 |
| Measured Loop1+2 MFR$_2$ [g/10 min] | 390 |
| Loop2 split [wt.-%] | 26 |
| Calculated Loop2 MFR$_2$ [g/10 min] | 665 |

(continued)

| | |
|---|---|
| GPR split [wt.-%] | 54 |
| Pellet density [kg/m$^3$] | 940.7 |
| Pellet MFR$_2$ [g/10 min] | 0.35 |
| Pellet MFR$_5$ [g/10 min] | 1.45 |
| Pellet MFR$_{21}$ [g/10 min] | 32.3 |
| C4 total (wt.-%) | 0.9 |
| C6 total (wt.-%) | 3.4 |

Polymerization of HDPE

HDPE was produced using a ZN catalyst (as disclosed in EP 2 994 506) in a pilot plant, with a configuration of prepolymerization - loop - gas phase reactor using the conditions as shown in Table 2 below, having an MFR$_2$ of 0.8 g/10 min, a density of 955.5 kg/m$^3$. It was pelletized with 500 ppm Irganox 1010 (supplied by BASF), 2000 ppm Irgafos 168 (supplied by BASF), 500 ppm calciumstearate (CEASIT FI, supplied by Baerlocher) in a twin screw extruder.

Table 2. Polymerization conditions and properties of HDPE

| | HDPE |
|---|---|
| **Prepolymerization** | |
| Temperature [°C] | 70 |
| Pressure [kPa] | 5700 |
| H$_2$ [g/h] | 5.0 |
| **Loop reactor** | |
| Temperature [°C] | 95 |
| Pressure [kPa] | 5500 |
| C2 conc. [mol-%] | 3.5 |
| H$_2$/C2 [mol/kmol] | 430.0 |
| Density [kg/m$^3$] | 970.0 |
| Split [wt.-%] | 49.0 |
| MFR$_2$ [g/10 min] | 350.0 |
| **GPR** | |
| Temperature [°C] | 85 |
| Pressure [kPa] | 2000 |
| H2/C2 [mol/kmol] | 110 |
| C4/C2 [mol/kmol] | 25.0 |
| Split [wt.-%] | 51.0 |
| Density* [kg/m$^3$] | 955.5 |
| MFR$_2$ * [g/10 min] | 0.80 |
| **Pellet** | |
| Density [kg/m$^3$] | 955.5 |
| MFR$_2$ [g/10 min] | 0.8 |
| MFR$_{21}$ [g/10 min] | 47.4 |
| FRR | 59 |

(continued)

| Pellet | |
|---|---|
| MFR$_2$ in GPR** [g/10 min] | 0.002 |
| Density in GPR** [kg/m$^3$] | 941.6 |
| * measured, ** calculated | |

Polymerization of R-PP1

The catalyst used in the polymerization process for R-PP1 was prepared as follows:
The metallocene MC1 (rac-anti-dimethylsilandiyl(2-methyl-4-phenyl-5-methoxy-6-tert-butyl-indenyl)(2-methyl-4-(4-tert-butylphenyl)indenyl)zirconium dichloride) has been synthesized as described in WO 2013/007650.

The catalyst was prepared using metallocene MC1 and a catalyst system of MAO and trityl tetrakis(pentafluorophenyl)borate according to Catalyst 3 of WO 2015/11135 with the proviso that the surfactant is 2,3,3,3-tetrafluoro-2-(1,1,2,2,3,3,3-heptafluoropropoxy)-1-propanol.

Table 3. Polymerization conditions for R-PP1

| | | R-PP1 |
|---|---|---|
| **Prepolymerization** | | |
| Temperature | [°C] | 17 |
| Residence time | [min] | 0.4 |
| **Loop reactor** | | |
| Temperature | [°C] | 68 |
| Feed H2/C3 ratio | [mol/kmol] | 0.1 |
| Feed C2/C3 ratio | [mol/kmol] | 15.2 |
| Split | [wt.-%] | 63 |
| MFR$_2$ | [g/10 min] | 4.48 |
| C2 content | [wt.-%] | 0.51 |
| **First GPR** | | |
| Temperature | [°C] | 83 |
| H2/C3 ratio | [mol/kmol] | 0.7 |
| C2/C3 ratio | [mol/kmol] | 97.6 |
| Split | [wt.-%] | 37 |
| **Pellet** | | |
| C2 total | [wt.-%] | 1.1 |
| 2,1-regiodefects | [mol-%] | 0.6 |
| MFR$_2$ | [g/10min] | 2.0 |
| Tm | [°C] | 145 |
| XCS | [wt.-%] | 0.51 |

R-PP1 was compounded in a co-rotating twin-screw extruder Coperion ZSK 47 at 220 °C with 0.05 wt.-% of pentaerythrityl-tetrakis(3-(3',5'-di-tert. butyl-4-hydroxyphenyl)-propionate (available as Irganox 1010 from BASF AG, Germany; CAS-no. 6683-19-8); 0.05 wt.-% of tris (2,4-di-t-butylphenyl) phosphite (available as Irgafos 168 from BASF AG, Germany; CAS-no. 31570-04-4); 0.03 wt.-% of synthetic hydrotalcite (available as Hycite 713 from BASF AG, Germany; CAS-no. 11097-59-9); and 0.08 wt.-% of a nucleating agent (available as ADK Stab NA-71 from Adeka Corporation, Germany; CAS-no (of main component) 85209-93-4). The properties of this pellets are listed on Table 3.

Production of MB

90 wt.-% of pellets of R-PP1 (contains all additives as described hereinabove) and 10 w.-t% of Polyglykol 8000 P (supplied by Clariant) were compounded on a ZSK 18 twin screw extruder, with melt temperature of 180 °C, throughput of 7kg/h.

Polymerization of R-PP2

R-PP2 was produced using a Ziegler-Natta catalyst (description is provided below), with the polymerization conditions presented in Table 4. It was produced in a Borstar pilot plant with a pre-polymerization reactor, one slurry loop reactor and one gas phase reactor. The solid catalyst was used along with triethyl-aluminium (TEAL) as cocatalyst and dicyclo pentyl dimethoxy silane (D-donor) as donor.

*1a) Catalyst preparation*

3.4 liter of 2-ethylhexanol and 810 ml of propylene glycol butyl monoether ( in a molar ratio 4/1) were added to a 20 l reactor. Then 7.8 liter of a 20 % solution in toluene of BEM (butyl ethyl magnesium) provided by Crompton GmbH was slowly added to the well stirred alcohol mixture. During the addition the temperature was kept at 10 °C. After addition the temperature of the reaction mixture was raised to 60 °C and mixing was continued at this temperature for 30 minutes. Finally, after cooling to room temperature the obtained Mg-alkoxide was transferred to storage vessel.

21.2 g of Mg alkoxide prepared above was mixed with 4,0 ml bis(2-ethylhexyl) citraconate for 5 min. After mixing the obtained Mg complex was used immediately in the preparation of catalyst component.

19.5 ml titanium tetrachloride was placed in a 300 ml reactor equipped with a mechanical stirrer at 25 °C. Mixing speed was adjusted to 170 rpm. 26.0 of Mg-complex prepared above was added within 30 minutes keeping the temperature at 25 °C . 3.0 ml of Viscoplex 1-254 and 24.0 ml of heptane were added to form an emulsion. Mixing was continued for 30 minutes at 25 °C. Then the reactor temperature was raised to 90 °C within 30 minutes. The reaction mixture was stirred for further 30 minutes at 90°C. Afterwards stirring was stopped and the reaction mixture was allowed to settle for 15 minutes at 90 °C.

The solid material was washed with 100 ml of toluene, with of 30 ml of TiCl4, with 100 ml of toluene and two times with 60 ml of heptane. I ml of donor was added to the two first washings. Washings were made at 80 °C under stirring 30 min with 170 rpm. After stirring was stopped the reaction mixture was allowed to settle for 20-30 minutes and followed by siphoning.

The solid material was washed 5 times: Washings were made at 80 °C under stirring 30 min with 170 rpm. After stirring was stopped the reaction mixture was allowed to settle for 20-30 minutes and followed by siphoning.

Wash 1: Washing was made with a mixture of 100 ml of toluene and 1 ml donor

Wash 2: Washing was made with a mixture of 30 ml of TiCl4 and 1 ml of donor.

Wash 3: Washing was made with 100 ml toluene.

Wash 4: Washing was made with 60 ml of heptane.

Wash 5. Washing was made with 60 ml of heptane under 10 minutes stirring.

Afterwards stirring was stopped and the reaction mixture was allowed to settle for 10 minutes decreasing the temperature to 70 °C with subsequent siphoning, and followed by N2 sparging for 20 minutes to yield an air sensitive powder.

*1b) VCH modification of catalyst*

35 ml of mineral oil (Paraffinum Liquidum PL68) was added to a 125 ml stainless steel reactor followed by 0.82 g of triethyl aluminium (TEAL) and 0.33 g of dicyclopentyl dimethoxy silane (donor D) under inert conditions at room temperature. After 10 minutes 5.0 g of the catalyst prepared in 1a (Ti content 1.4 wt.-%) was added and after additionally 20 minutes 5.0 g of vinylcyclohexane (VCH) was added.).The temperature was increased to 60 °C during 30 minutes and was kept there for 20 hours. Finally, the temperature was decreased to 20 °C and the concentration of unreacted VCH in the oil/catalyst mixture was analysed and was found to be 120 ppm weight.

Table 4. Polymerization conditions for R-PP2

| | | R-PP2 |
|---|---|---|
| **Prepoly** | | |
| TEAL/Donor | [mol/mol] | 10 |
| TEAL/Ti | [mol/mol] | 200 |
| Temperature | [°C] | 30 |
| Pressure | [kPa] | 2500 |
| Residence time | [min] | 20 |
| **Loop (R1)** | | |
| Temperature | [°C] | 80 |
| Pressure | [kPa] | 5500 |
| Split | [wt.-%] | 60 |
| Feed H2/C3 | [mol/kmol] | 2.10 |
| Feed C2/C3 | [mol/kmol] | 0.80 |
| $MFR_2$ | [g/10 min] | 3.8 |
| C2(Loop) | [wt.-%] | 0.65 |
| **GPR (R2)** | | |
| Temperature | [°C] | 80 |
| Pressure | [kPa] | 2800 |
| Split | [wt.-%] | 40 |
| Feed H2/C3 | [mol/kmol] | 15.4 |
| Feed C2/C3 | [mol/kmol] | 1.5 |
| $MFR_2$* | [g/10 min] | 3.8 |
| $MFR_2$ (GPR1)** | [g/10 min] | 3.8 |
| C2 (GPR1) | [wt.-%] | 0.65 |
| XCS | [wt.-%] | 2.2 |

*calculated, **measured*

R-PP2 was then mixed with different additives in an intensive mixer and compounded in a co-rotating twin-screw extruder, using the recipe provided in Table 5 below, which also presents some of the properties measured on pellets, where AO1 is Irganox 1010 (supplied by BASF AG, DE), AO2 is Irgafos 168 (supplied by BASF AG, DE) and AS is Calcium stearate (Ceasit FI supplied by Baerlocher, DE).

Table 5. Recipes and properties of compound prepared from R-PP2

| | | R-PP2 |
|---|---|---|
| Base polymer | [wt.-%] | 99.87 |
| AO1 | [wt.-%] | 0.03 |
| AO2 | [wt.-%] | 0.06 |
| AS | [wt.-%] | 0.04 |
| Pellet | | |
| $MFR_2$ | [g/10 min] | 3.8 |
| Mw/Mn | - | 5.4 |

(continued)

| Pellet | | |
|---|---|---|
| XCS | [wt.-%] | 2.2 |
| C2 (total) | [wt.-%] | 0.65 |
| Tm | [°C] | 161 |
| Tc | [°C] | 125 |
| Tm-Tc | [°C] | 36 |

<u>Multilayer MDO films</u>

All film structures were produced on Alpine Hosokawa film line, in the same processing conditions (BUR of 2.5:1, thickness 150 micrometers, die-gap of 1.5 mm, die diameter 200 mm, throughput of 180 kg/h, lower neck-height, external bubble cooling).

The layer distribution of the multilayer films made in A/A'/B/C'/C structure, which is the same for both inventive examples and comparative example, and the composition of each layers are presented in Table 6.

Table 6. Layer distribution and composition of the multilayer films*

| Layer distribution | | CE1 | IE1 | IE2 |
|---|---|---|---|---|
| 10% | **C** | HDPE (100%) | R-PP2 (90%) FK1820 (10%) | R-PP1 (97%) MB (3%) |
| 15% | **C'** | CP (40%) HDPE (60%) | CP (90%) FK1820 (10%) | CP (100%) |
| 50% | **B** | CP (100%) | CP (100%) | CP (100%) |
| 15% | **A'** | CP (40%) HDPE (60%) | CP (40%) HDPE (60%) | CP (40%) HDPE (60%) |
| 10% | **A** | HDPE (100%) | HDPE (100%) | HDPE (100%) |
| *Compositions of the layers are provided in weight percentage, based on the total weight of the respective layer.* | | | | |

The blown films described above were stretched along the machine direction on an Alpine MDO 20 line. The stretching roll temperature was 118 °C, and take off speed was 61 m/min. The stretch ratio was 6:1, which resulted in a final film thickness of 25 $\mu$m.

Table 7 below gives the properties of films (measured on MDO films with a thickness of 25 $\mu$m) produced according to the recipes given in Table 6.

Table 7. Performance of multilayer films

| Property | Unit | CE1 | IE1 | IE2 |
|---|---|---|---|---|
| **TM/MD** | [MPa] | 1266 | 1441 | 1508 |
| **TS/MD** | [MPa] | 159.5 | 130.2 | 192.8 |
| **Elongation/MD** | [%] | 48.2 | 32.8 | 44.4 |
| **TM/TD** | [MPa] | 1881 | 1593 | 1784 |
| **TS/TD** | [MPa] | 32.9 | 30.3 | 31.1 |
| **Elongation/TD** | [%] | 852 | 801 | 758 |
| **TM/MD:TM/TD** | | 0.67 | 0.90 | 0.85 |
| **Haze** | [%] | 11.0 | 10.7 | 8.4 |
| **Shrinkage/MD** | | | | |
| **90 °C** | [%] | -2.6 | -12.6 | -12.5 |

(continued)

| Property | Unit | CE1 | IE1 | IE2 |
|---|---|---|---|---|
| 100 °C | [%] | -5.2 | -19.9 | -19.6 |
| 110 °C | [%] | -11.9 | -31.9 | -29.9 |
| 120 °C | [%] | -31 | -49.6 | -47.5 |
| 130 °C | [%] | -80 | -76.4 | -68.9 |
| 140 °C | [%] | -80.2 | -68.3 | -61.4 |

As can be seen, a proper design of a film structure could lead to improved mechanical properties in terms of tensile modulus and strength in MD. Meanwhile the anisotropic effect (reflected as the ratio between tensile modules of MD:TD) is much less, which is a clear benefit, since typically an MDO film exhibits very strong anisotropic effect.

Another merit of the films obtained according to the present invention is the improved shrinkage behavior. It is known that for some end applications like heat shrinkable films, one would need to have higher shrinkage at certain temperatures. Compared to CE1, both IE1 and IE2 have much higher shrinkage at lower temperatures (e.g. 90 - 120 °C), but have lower shrinkage at higher temperatures (130 °C and above). This means that the IEs can be used in much broader temperature range, especially at lower temperatures which is beneficial due to lower energy consumption. In comparison, the CE1 has very narrow processing window, as it shows high shrinkage only between 120°C and at 130°C, where the polymer is already molten.

Finally, both IE1 and IE2 exhibit an improved optical performance in terms of lower haze.

## Claims

1. A machine direction oriented (MDO) multilayer film comprising

   i) a first skin layer (A) comprising a multimodal high density polyethylene composition (HDPE) having a density, as determined in accordance with ISO 1183, of from 940 to 975 $kg/m^3$ and a melt flow rate $MFR_2$, as determined in accordance with ISO1133 at 2.16 kg and 190 °C, of from 0.1 to 10 g/10 min;
   ii) a core layer (B), sandwiched between the first skin layer (A) and a second skin layer (C), comprising a copolymer of ethylene and at least a first $C_4$-$C_{12}$ alpha-olefin comonomer (CP) having a density, as determined in accordance with ISO 1183, of from 925 to 960 $kg/m^3$ and a melt flow rate $MFR_5$, as determined in accordance with ISO1133 at 5.0 kg and 190 °C, of from 0.1 to 10 g/10 min; and
   iii) a second skin layer (C) comprising a propylene-ethylene random copolymer (R-PP) having a comonomer content, as determined by $^{13}$C-NMR spectroscopy, of from 0.1 to 5.0 wt.-% and a melt flow rate $MFR_2$, as determined in accordance with ISO1133 at 2.16 kg and 230 °C, of from 0.1 to 10 g/10 min.

2. Machine direction oriented (MDO) multilayer film according to claim 1, further comprising:

   iv) a first sub-skin layer (A') comprising a multimodal high density polyethylene composition (HDPE) having a density, as determined in accordance with ISO 1183, of from 940 to 975 $kg/m^3$ and a copolymer of ethylene and at least a first C4-C12 alpha-olefin comonomer (CP) having a density as determined in accordance with ISO 1183, of from 925 to 960 $kg/m^3$; and
   v) a second sub-skin layer (C') comprising a copolymer of ethylene and at least a first C4-C12 alpha-olefin comonomer (CP) having a density as determined in accordance with ISO 1183, of from 925 to 960 $kg/m^3$.

3. Machine direction oriented (MDO) multilayer film according to any of the preceding claims, wherein the propylene-ethylene random copolymer (R-PP) of the second skin layer (C) has:

   - a comonomer content, as determined by $^{13}$C-NMR spectroscopy, of from 0.2 to 4.5 wt.-%, more preferably from 0.5 to 3.0 wt.-%; and/or
   - a xylene cold soluble content (XCS), as determined in accordance with ISO 16152, of from 0.1 to 10 wt.-%, more preferably from 0.2 to 5.0 wt.-%, and most preferably from 0.3 to 3.5 wt.-%.

4. Machine direction oriented (MDO) multilayer film according to any of the preceding claims, wherein the propylene-ethylene random copolymer (R-PP) of the second skin layer (C) has a melt flow rate $MFR_2$, as determined in

accordance with ISO1133 at 2.16 kg and 230 °C, of from 0.5 to 7 g/10 min, more preferably from 1 to 5 g/10 min.

5. Machine direction oriented (MDO) multilayer film according to any of the preceding claims, wherein the copolymer of ethylene and at least a first C4-C12 alpha-olefin comonomer (CP) further comprises a second $C_4$-$C_{12}$ alpha-olefin comonomer.

6. Machine direction oriented (MDO) multilayer film according to claim 5, wherein the copolymer of ethylene and at least a first C4-C12 alpha-olefin comonomer (CP) is a terpolymer of ethylene/1-butene/1-hexene.

7. Machine direction oriented (MDO) multilayer film according to claim 6, wherein the copolymer of ethylene and at least a first C4-C12 alpha-olefin comonomer (CP) has:

   - a 1-butene content, as determined by $^{13}$C-NMR spectroscopy, of from 0.1 to 10 wt.-%, more preferably from 0.2 to 5 wt.-%, and most preferably from 0.5 to 3 wt.-%; and/or
   - a 1-hexene content, as determined by $^{13}$C-NMR spectroscopy, of from 0.1 to 20 wt.-%, more preferably from 1 to 10 wt.-%, and most preferably from 2 to 7 wt.-%.

8. Machine direction oriented (MDO) multilayer film according to any of the preceding claims, wherein the copolymer of ethylene and at least a first C4-C12 alpha-olefin comonomer (CP) has a density, as determined in accordance with ISO 1183, of from 930 to 955 kg/m$^3$, more preferably from 935 to 945 kg/m$^3$.

9. Machine direction oriented (MDO) multilayer film according to any of the preceding claims, wherein the multimodal high density polyethylene composition (HDPE) has a density, as determined in accordance with ISO 1183, of from 945 to 970 kg/m$^3$, more preferably from 950 to 965 kg/m$^3$.

10. Machine direction oriented (MDO) multilayer film according to any of the preceding claims, wherein the multimodal high density polyethylene composition (HDPE) has a flow rate ratio (FRR), as determined in accordance with ISO1133, of from 5 to 150, more preferably from 20 to 100, and most preferably from 40 to 80.

11. Machine direction oriented (MDO) multilayer film according to any of the preceding claims, having a thickness of from 5 to 250 $\mu$m, more preferably from 10 to 200 $\mu$m, and most preferably from 15 to 100 $\mu$m.

12. Machine direction oriented (MDO) multilayer film according to any of the preceding claims, having a haze, as determined in accordance with ASTM D1003 on 25 $\mu$m MDO multilayer film, of from 0 to 15%, more preferably from 2 to 12%, and most preferably from 5 to 10%.

13. Machine direction oriented (MDO) multilayer film according to any of the preceding claims, having:

   - a shrinkage in machine direction, as determined by method described herein at 90 °C, of from -3 to -20%, more preferably from -5 to -15%, and/or
   - a shrinkage in machine direction, as determined by method described herein at 100 °C, of from -10 to -30%, more preferably from -15 to -25%.

14. Machine direction oriented (MDO) multilayer film according to any of the preceding claims, having a ratio of tensile modulus in machine direction (TM/MD) to tensile modulus in transverse direction (TM/TD), as determined in accordance with ISO 527-3, of from 0.1 to 3.0, more preferably from 0.5 to 2.0, and most preferably of from 0.7 to 1.5.

15. Use of a machine direction oriented (MDO) multilayer film according to any of the preceding claims as heat-shrinkable film and/or form-fill-seal bags.

**Patentansprüche**

1. Eine in Maschinenrichtung orientierte (MDO) Mehrschichtfolie, umfassend

   i) eine erste Deckschicht (A) umfassend eine multimodale Polyethylen Zusammensetzung hoher Dichte (HDPE) mit einer Dichte gemäß ISO 1183 von 940 bis 975 kg/m$^3$ und einer Schmelzflussrate MFR$_2$, bestimmt gemäß ISO 1133 bei 2,16 kg und 190 °C, von 0,1 bis 10 g/10 min;

ii) eine Kernschicht (B), die zwischen der ersten Deckschicht (A) und einer zweiten Deckschicht (C) angeordnet ist, umfassend ein Copolymer aus Ethylen und mindestens einem ersten $C_4$-$C_{12}$-alpha-Olefin Comonomer (CP) mit einer Dichte gemäß ISO 1183 von 925 bis 960 kg/m$^3$ und einer Schmelzflussrate MFR$_5$ gemäß ISO 1133 bei 5,0 kg und 190 °C von 0,1 bis 10 g/10 min; und

iii) eine zweite Deckschicht (C) umfassend ein statistisches Propylen-Ethylen Copolymer (R-PP) mit einem Gehalt an Comonomer, bestimmt durch $^{13}$C-NMR-Spektroskopie, von 0,1 bis 5,0 Gew.-% und einer Schmelzflussrate MFR$_2$, bestimmt gemäß ISO 1133 bei 2,16 kg und 230 °C, von 0,1 bis 10 g/10 min.

2. In Maschinenrichtung orientierte (MDO) Mehrschichtfolie gemäß Anspruch 1, der ferner umfasst:

iv) eine erste Unterschicht (A') umfassend eine multimodale Polyethylen Zusammensetzung (HDPE) hoher Dichte mit einer Dichte gemäß ISO 1183 von 940 bis 975 kg/m$^3$ und ein Copolymer aus Ethylen und mindestens einem ersten $C_4$-$C_{12}$-alpha-Olefin Comonomer (CP) mit einer gemäß ISO 1183 bestimmten Dichte von 925 bis 960 kg/m$^3$ ; und

v) eine zweite Unterschicht (C') umfassend ein Copolymer aus Ethylen und mindestens einem ersten $C_4$-$C_{12}$-alpha-Olefin Comonomer (CP) mit einer gemäß ISO 1183 bestimmten Dichte von 925 bis 960 kg/m$^3$.

3. In Maschinenrichtung orientierte (MDO) Mehrschichtfolie gemäß einem der vorstehenden Ansprüche, wobei das statistische Propylen-Ethylen Copolymer (R-PP) der zweiten Deckschicht (C) aufweist:

- einen Gehalt an Comonomer, bestimmt durch $^{13}$C-NMR-Spektroskopie, von 0,2 bis 4,5 Gew.-%, noch mehr bevorzugt von 0,5 bis 3,0 Gew.-%; und/oder
- einen Gehalt an in kaltem Xylol Löslichen (XCS), bestimmt gemäß ISO 16152, von 0,1 bis 10 Gew.-%, noch mehr bevorzugt von 0,2 bis 5,0 Gew.-% und am meisten bevorzugt von 0,3 bis 3,5 Gew.-%.

4. In Maschinenrichtung orientierte (MDO) Mehrschichtfolie gemäß einem der vorstehenden Ansprüche, wobei das statistische Propylen-Ethylen Copolymer (R-PP) der zweiten Deckschicht (C) eine Schmelzflussrate MFR$_2$ gemäß ISO 1133 bei 2,16 kg und 230 °C von 0,5 bis 7 g/10 min, noch mehr bevorzugt von 1 bis 5 g/10 min aufweist.

5. In Maschinenrichtung orientierte (MDO) Mehrschichtfolie gemäß einem der vorstehenden Ansprüche, wobei das Copolymer aus Ethylen und mindestens einem ersten $C_4$-$C_{12}$-alpha-Olefin Comonomer (CP) ferner ein zweites $C_4$-$C_{12}$ -alpha-Olefin Comonomer umfasst.

6. In Maschinenrichtung orientierte (MDO) Mehrschichtfolie gemäß Anspruch 5, wobei das Copolymer aus Ethylen und mindestens einem ersten $C_4$-$C_{12}$-alpha-Olefin Comonomer (CP) ein Terpolymer aus Ethylen/1-Buten/1-Hexen ist.

7. In Maschinenrichtung orientierte (MDO) Mehrschichtfolie gemäß Anspruch 6, wobei das Copolymer aus Ethylen und mindestens einem ersten $C_4$-$C_{12}$-alpha-Olefin Comonomer (CP) aufweist:

- einen Gehalt an 1-Buten, bestimmt durch $^{13}$C-NMR-Spektroskopie, von 0,1 bis 10 Gew.-%, noch mehr bevorzugt von 0,2 bis 5 Gew.-% und am meisten bevorzugt von 0,5 bis 3 Gew.-%; und/oder
- einen Gehalt an 1-Hexen, bestimmt durch $^{13}$ C-NMR-Spektroskopie, von 0,1 bis 20 Gew.-%, noch mehr bevorzugt von 1 bis 10 Gew.-% und am meisten bevorzugt von 2 bis 7 Gew.-%.

8. In Maschinenrichtung orientierte (MDO) Mehrschichtfolie gemäß einem der vorstehenden Ansprüche, wobei das Copolymer aus Ethylen und mindestens einem ersten $C_4$-$C_{12}$-alpha-Olefin Comonomer (CP) eine Dichte gemäß ISO 1183 von 930 bis 955 kg/m$^3$, noch mehr bevorzugt von 935 bis 945 kg/m$^3$, aufweist.

9. In Maschinenrichtung orientierte (MDO) Mehrschichtfolie gemäß einem der vorstehenden Ansprüche, wobei die multimodale Polyethylen Zusammensetzung hoher Dichte (HDPE) eine Dichte gemäß ISO 1183 von 945 bis 970 kg/m$^3$, noch mehr bevorzugt von 950 bis 965 kg/m$^3$, aufweist.

10. In Maschinenrichtung orientierte (MDO) Mehrschichtfolie gemäß einem der vorstehenden Ansprüche, wobei die multimodale Polyethylen Zusammensetzung hoher Dichte (HDPE) ein Verhältnis der Fließgeschwindigkeiten (FRR) gemäß ISO 1133 von 5 bis 150, noch mehr bevorzugt von 20 bis 100 und am meisten bevorzugt von 40 bis 80 aufweist.

11. In Maschinenrichtung orientierte (MDO) Mehrschichtfolie gemäß einem der vorstehenden Ansprüche, die eine Dicke von 5 bis 250 µm, noch mehr bevorzugt von 10 bis 200 µm und am meisten bevorzugt von 15 bis 100 µm aufweist.

**EP 4 552 843 B1**

**12.** In Maschinenrichtung orientierte (MDO) Mehrschichtfolie gemäß einem der vorstehenden Ansprüche, die eine Trübung, bestimmt gemäß ASTM D1003 auf einer 25 μm MDO-Mehrschichtfolie, von 0 bis 15 %, noch mehr bevorzugt von 2 bis 12 % und am meisten bevorzugt von 5 bis 10 % aufweist.

**13.** In Maschinenrichtung orientierte (MDO) Mehrschichtfolie gemäß einem der vorstehenden Ansprüche, mit:

- eine Schrumpfung in Maschinenrichtung, bestimmt nach dem hierin beschriebenen Verfahren bei 90 °C, von -3 bis -20 %, noch mehr bevorzugt von -5 bis -15 %, und/oder
- eine Schrumpfung in Maschinenrichtung, bestimmt nach dem hierin beschriebenen Verfahren bei 100 °C, von -10 bis -30 %, noch mehr bevorzugt von -15 bis -25 %.

**14.** In Maschinenrichtung orientierte (MDO) Mehrschichtfolie gemäß einem der vorstehenden Ansprüche, die ein Verhältnis des Zugmoduls in Maschinenrichtung (TM/MD) zum Zugmodul in Querrichtung (TM/TD), bestimmt gemäß ISO 527-3, von 0,1 bis 3,0, noch mehr bevorzugt von 0,5 bis 2,0, und am meisten bevorzugt von 0,7 bis 1,5 aufweist.

**15.** Verwendung einer in Maschinenrichtung orientierten (MDO) Mehrschichtfolie gemäß einem der vorstehenden Ansprüche als Heißschrumpffolie und/oder als Form-Füll-Verschweiß-Beutel.

**Revendications**

**1.** Film multicouche orienté dans le sens machine (MDO) comprenant

i) une première couche de peau (A) comprenant une composition de polyéthylène haute densité (HDPE) multimodal présentant une masse volumique, déterminée conformément à la norme ISO 1183, de 940 à 975 kg/m$^3$ et un indice de fluidité à chaud MFR$_2$, déterminé conformément à la norme ISO1133 à 2,16 kg et 190 °C, de 0,1 à 10 g/10 min ;
ii) une couche centrale (B), intercalée entre la première couche de peau (A) et une seconde couche de peau (C), comprenant un copolymère d'éthylène et d'au moins un premier comonomère d'alpha-oléfine en C$_4$-C$_{12}$ (CP) présentant une masse volumique, déterminée conformément à la norme ISO 1183, de 925 à 960 kg/m$^3$ et un indice de fluidité à chaud MFR$_5$, déterminé conformément à la norme ISO1133 à 5,0 kg et 190 °C, de 0,1 à 10 g/10 min ; et
iii) une seconde couche de peau (C) comprenant un copolymère statistique de propylène-éthylène (R-PP) présentant une teneur en comonomère, déterminée par spectroscopie RMN $^{13}$C, de 0,1 à 5,0 % en poids et un indice de fluidité à chaud MFR$_2$, déterminé conformément à la norme ISO1133 à 2,16 kg et 230 °C, de 0,1 à 10 g/10 min.

**2.** Film multicouche orienté dans le sens machine (MDO) selon la revendication 1, comprenant en outre :

iv) une première sous-couche de peau (A') comprenant une composition de polyéthylène haute densité (HDPE) multimodal présentant une masse volumique, déterminée conformément à la norme ISO 1183, de 940 à 975 kg/m$^3$ et un copolymère d'éthylène et d'au moins un premier comonomère d'alpha-oléfine en C4-C12 (CP) présentant une masse volumique, déterminée conformément à la norme ISO 1183, de 925 à 960 kg/m$^3$ ; et
v) une seconde sous-couche de peau (C') comprenant un copolymère d'éthylène et d'au moins un premier comonomère d'alpha-oléfine en C4-C12 (CP) présentant une masse volumique, déterminée conformément à la norme ISO 1183, de 925 à 960 kg/m$^3$.

**3.** Film multicouche orienté dans le sens machine (MDO) selon l'une des revendications précédentes, dans lequel le copolymère statistique de propylène-éthylène (R-PP) de la seconde couche de peau (C) présente :

- une teneur en comonomère, déterminée par spectroscopie RMN $^{13}$C, de 0,2 à 4,5 % en poids, de préférence de 0,5 à 3,0 % en poids ; et/ou
- une teneur en substance soluble dans le xylène froid (XCS), déterminée conformément à la norme ISO 16152, de 0,1 à 10 % en poids, plus préférentiellement de 0,2 à 5,0 % en poids, et le plus préférentiellement de 0,3 à 3,5 % en poids.

**4.** Film multicouche orienté dans le sens machine (MDO) selon l'une des revendications précédentes, dans lequel le copolymère statistique de propylène-éthylène (R-PP) de la seconde couche de peau (C) présente un indice de fluidité

à chaud MFR$_2$, déterminé conformément à la norme ISO1133 à 2,16 kg et 230 °C, de 0,5 à 7 g/10 min, de préférence de 1 à 5 g/10 min.

5. Film multicouche orienté dans le sens machine (MDO) selon l'une des revendications précédentes, dans lequel le copolymère d'éthylène et d'au moins un premier comonomère d'alpha-oléfine en C$_4$-C$_{12}$ (CP) comprend en outre un second comonomère d'alpha-oléfine en C$_4$-C$_{12}$.

6. Film multicouche orienté dans le sens machine (MDO) selon la revendication 5, dans lequel le copolymère d'éthylène et d'au moins un premier comonomère d'alpha-oléfine en C4-C12 (CP) est un terpolymère d'éthylène/1-butène/1-hexène.

7. Film multicouche orienté dans le sens machine (MDO) selon la revendication 6, dans lequel le copolymère d'éthylène et d'au moins un premier comonomère d'alpha-oléfine en C4-C12 (CP) présente :

   - une teneur en 1-butène, déterminée par spectroscopie RMN $^{13}$C, de 0,1 à 10 % en poids, de préférence de 0,2 à 5 % en poids, et plus préférentiellement de 0,5 à 3 % en poids ; et/ou
   - une teneur en 1-hexène, déterminée par spectroscopie RMN $^{13}$C, de 0,1 à 20 % en poids, de préférence de 1 à 10 % en poids, et plus préférentiellement de 2 à 7 % en poids.

8. Film multicouche orienté dans le sens machine (MDO) selon l'une des revendications précédentes, dans lequel le copolymère d'éthylène et d'au moins un premier comonomère d'alpha-oléfine en C4-C12 (CP) présente une masse volumique, déterminée conformément à la norme ISO 1183, de 930 à 955 kg/m$^3$, de préférence de 935 à 945 kg/m$^3$.

9. Film multicouche orienté dans le sens machine (MDO) selon l'une des revendications précédentes, dans lequel la composition de polyéthylène haute densité (HDPE) multimodal présente une masse volumique, déterminée conformément à la norme ISO 1183, de 945 à 970 kg/m$^3$, de préférence de 950 à 965 kg/m$^3$.

10. Film multicouche orienté dans le sens machine (MDO) selon l'une des revendications précédentes, dans lequel la composition de polyéthylène haute densité (HDPE) multimodal présente un rapport de débit (FRR), déterminé conformément à la norme ISO1133, de 5 à 150, plus préférentiellement de 20 à 100, et le plus préférentiellement de 40 à 80.

11. Film multicouche orienté dans le sens machine (MDO) selon l'une des revendications précédentes, présentant une épaisseur de 5 à 250 $\mu$m, plus préférentiellement de 10 à 200 $\mu$m, et le plus préférentiellement de 15 à 100 $\mu$m.

12. Film multicouche orienté dans le sens machine (MDO) selon l'une des revendications précédentes, présentant un trouble, déterminé conformément à la norme ASTM D1003 sur un film multicouche MDO de 25 $\mu$m, de 0 à 15 %, plus préférentiellement de 2 à 12 %, et le plus préférentiellement de 5 à 10 %.

13. Film multicouche orienté dans le sens machine (MDO) selon l'une des revendications précédentes, présentant :

   - un retrait dans le sens machine, déterminé par le procédé décrit dans le présent document à 90 °C, de -3 à -20 %, plus préférentiellement de -5 à -15 %, et/ou
   - un retrait dans le sens machine, déterminé par le procédé décrit dans le présent document à 100 °C, de - 10 à -30 %, plus préférentiellement de -15 à -25 %.

14. Film multicouche orienté dans le sens machine (MDO) selon l'une des revendications précédentes, présentant un rapport module de traction dans le sens machine (TM/MD) sur module de traction dans le sens transversal (TM/TD), déterminé conformément à la norme ISO 527-3, de 0,1 à 3,0, plus préférentiellement de 0,5 à 2,0, et le plus préférentiellement de 0,7 à 1,5.

15. Utilisation d'un film multicouche orienté dans le sens machine (MDO) selon l'une des revendications précédentes comme film thermorétractable et/ou pour sachets type formage-remplissage-scellage.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20170342249 A1
- US 11535012 B2
- WO 2020167441 A1
- EP 1378528 A
- EP 2994506 A
- WO 2013007650 A
- WO 201511135 A

### Non-patent literature cited in the description

- **BUSICO, V.** ; **CIPULLO, R**. *Prog. Polym. Sci.*, 2001, vol. 26, 443
- **BUSICO, V.** ; **CIPULLO, R** ; **MONACO, G.** ; **VACATELLO, M** ; **SEGRE, A.L.** *Macromolecules*, 1997, vol. 30, 6251
- **ZHOU, Z** ; **KUEMMERLE, R.** ; **QIU, X** ; **REDWINE, D** ; **CONG, R.** ; **TAHA, A** ; **BAUGH, D** ; **WINNIFORD, B.** *J. Mag. Reson*, 2007, vol. 187, 225
- **BUSICO, V** ; **CARBONNIERE, P.** ; **CIPULLO, R.** ; **PELLECCHIA, R** ; **SEVERN, J.** ; **TALARICO, G**. *Macromol. Rapid Commun.*, 2007, vol. 28, 11289
- **RESCONI, L** ; **CAVALLO, L** ; **FAIT, A** ; **PIEMONTESI, F**. *Chem. Rev.*, 2000, vol. 100, 1253
- **WANG, W-J.** ; **ZHU, S.** *Macromolecules*, 2000, vol. 33, 1157
- **CHENG, H. N**. *Macromolecules*, 1984, vol. 17, 1950
- **BUSICO, V** ; **CIPULLO, R.** ; **MONACO, G** ; **VACATELLO, M.** ; **SEGRE, A.L**. *Macromolecules*, 1997, vol. 30, 6251
- **RESCONI, L** ; **CAVALLO, L.** ; **FAIT, A.** ; **PIEMONTESI, F**. *Chem. Rev.*, 2000, vol. 100, 1253
- **KLIMKE, K.** ; **PARKINSON, M.** ; **PIEL, C.** ; **KAMINSKY, W** ; **SPIESS, H.W** ; **WILHELM, M.** *Macromol. Chem. Phys.*, 2006, vol. 207, 382
- **POLLARD, M.** ; **KLIMKE, K.** ; **GRAF, R** ; **SPIESS, H.W.** ; **WILHELM, M.** ; **SPERBER, O.** ; **PIEL, C** ; **KAMINSKY, W.** *Macromolecules*, 2004, vol. 37, 813
- **FILIP, X** ; **TRIPON, C.** ; **FILIP, C.** *J. Mag. Resn.*, 2005, vol. 176, 239
- *CHEMICAL ABSTRACTS*, 6683-19-8
- *CHEMICAL ABSTRACTS*, 31570-04-4
- *CHEMICAL ABSTRACTS*, 11097-59-9
- *CHEMICAL ABSTRACTS*, 85209-93-4